# DEMANDE DE BREVET EUROPEEN

(11) **EP 1 672 875 A2**
(43) Date de publication de la demande: **21.06.2006**
(21) Numéro de dépôt: 05301060.9
(22) Date de dépôt: 15.12.2005
(51) Int. Cl.: H04L 29/06, H04L 29/12, H04M 1/247, H04M 11/00

(54) **Procédé de commande à distance d'un combiné de téléphonie fixe**

(30) Priorité: 16.12.2004 FR 0453026
(71) Demandeur: Sagem SA, 75015 Paris (FR)
(72) Inventeur: Leloup, Philippe, 94130 Nogent sur Marne (FR); Le Dillau, Cédric, 95100 Argenteuil (FR)
(74) Mandataire: Schmit, Christian Norbert Marie

(57) **Abrégé**

Pour permettre la commande distante d'un combiné de téléphonie fixe on dote celui-ci de moyen de reconnaissance d'une demande de connexion en mode données et de moyen d'identification. Il est alors possible, lors d'un appel entrant (201) de détecter (202) un terminal souhaitant réaliser une commande à distance, et d'identifier (204) l'utilisateur du terminal. Le combiné se comporte alors comme un serveur Internet, le terminal mettant en oeuvre un navigateur.

## Description

L'invention a pour objet un procédé de commande à distance d'un combiné de téléphonie fixe. Le domaine de l'invention est celui de la téléphonie fixe et plus particulièrement des combinés de téléphonie fixe permettant des fonctions avancées comme la visiophonie, l'émission et la réception de message court ou la gestion d'agenda. Cette liste n'est pas exhaustive.

Le but principal de l'invention est de permettre la commande à distance d'un combiné de téléphonie fixe.

Un autre but secondaire de l'invention est de permettre la commande à distance depuis n'importe quel terminal connecté à un réseau de téléphonie.

Encore un autre but secondaire de l'invention est de sécuriser la commande à distance d'un combiné de téléphonie fixe.

Dans l'état de la technique on connaît des combinés de téléphonie fixe proposant des fonctionnalités de répondeur vocal. Cette fonctionnalité peut être atteinte à distance par le propriétaire utilisateur d'un tel combiné répondeur en effectuant un appel vers ce combiné depuis un autre combiné appelant. Le combiné répondeur décroche automatiquement au bout d'un nombre prédéterminé de sonnerie. L'utilisateur appelant peut alors saisir un code pour avoir accès aux messages du combiné répondeur. La saisie du code se fait via les touches du combiné appelant. Le combiné appelant en réponse à des pressions sur ces touches émet des sons, ou séquences DTMF (Dual Tone Modulation Frequency, pour tonalité à deux fréquences modulées).

Un problème de l'état de la technique et que bien qu'un combiné puisse proposer de nombreuses autres fonctionnalités que répondeur, il est uniquement possible d'accéder à un nombre limité de fonctions via cette interface à distance limitée à 12 touches dans le meilleur des cas.

Un autre problème de l'état de la technique est que cette interface n'est pas conviviale, obligeant l'utilisateur à mémoriser la séquence de touches nécessaires à l'exécution d'une fonction de paramétrage.

Encore un autre problème de l'état de la technique est que l'interface proposée est vocale, et donc limitative des possibilités de commande à distance.

L'invention résout ces problèmes en dotant un combiné fixe de capacité d'identification d'un appelant distant, cet appelant distant s'étant présenté comme un appelant en mode données. Une fois l'appelant connecté et identifié, le combiné se comporte comme un serveur. L'appelant utilise alors un logiciel de navigation pour interroger le combiné et obtenir une interface de commande à travers laquelle il peut commander les fonctions du combiné. Par exemple le combiné se comporte comme un serveur HTTP (HyperText Transfer Protocol, pour protocole de transfert d'hypertext), l'appelant distant utilise alors un navigateur Internet pour dialoguer avec le combiné devenu serveur. De ce fait il est dés lors possible d'obtenir du combiné, ou d'envoyer vers le combiné, des contenus multimédia (texte, son, image, etc.). Il est devient également possible via l'interface du site internet embarqué dans le combiné de reconfigurer son terminal, d'émettre une commande telle que la prise d'une photo via la caméra embarqué ou encore de consulter son répertoire téléphonique.

L'invention a donc comme objet un procédé de commande à distance d'un combiné de téléphonie fixe connecté à un réseau de téléphonie via un modem, le procédé étant mis en oeuvre par un terminal distant connecté au réseau de téléphonie via au moins un modem, le terminal distant appelant le combiné via le réseau de téléphonie, procédé caractérisé en ce qu'il comporte au moins les étapes suivantes:
- le terminal distant appelle le combiné,
- le terminal distant s'identifie comme un appelant en mode données,
- le combiné reconnaît le terminal distant comme un appelant en mode données et établie une connexion en mode données,
- le combiné et le terminal entrent dans une procédure d'identification de l'appelant, le combiné agissant ainsi en tant que serveur d'identification,
en cas d'identification positive :
- le combiné émet des données correspondant à une interface de commande dudit combiné, ladite interface permettant la commande des fonctionnalités du combiné.

Avantageusement l'invention est aussi caractérisée en ce que les données correspondant à l'interface de commande sont de type HTML, le combiné se comportant comme un serveur HTTP et le terminal comme un client HTTP-HTML.

Avantageusement l'invention est aussi caractérisée en ce que le combiné comportant une caméra:
- le terminal émet une requête pour activer ladite caméra,
- le combiné émet en réponse des images acquises par la caméra à intervalles réguliers.

Avantageusement l'invention est aussi caractérisée en ce que le combiné comportant un microphone :
- le terminal émet une requête pour activer ledit microphone,
- le combiné émet en réponse des sons acquis par le microphone.
   Avantageusement l'invention est aussi caractérisée en ce que le combiné comportant au moins une mémoire de stockage,
- le terminal émet une requête pour accéder, en lecture et/ou en écriture, à cette mémoire,
- le combiné émet en réponse le contenu de ladite mémoire ou met à jour le contenu de ladite mémoire.

Avantageusement l'invention est aussi caractérisée en ce que :
- l'utilisateur compose un message via le terminal, ledit message composé comportant au moins un identifiant de destinataire et un corps comportant des données de type texte, image et/ou son,
- le terminal émet le message composé vers le combiné,
- le combiné émet le message composé vers le destinataire.

L'invention sera mieux comprise à la lecture de la description qui suit et à l'examen des figures qui l'accompagnent. Celles-ci sont présentées à titre indicatif et nullement limitatif de l'invention. les figures montrent:
Figure 1: une illustration d'un système dans lequel peut être mis en oeuvre le procédé selon l'invention.
Figure 2: une illustration d'étapes du procédé selon l'invention.

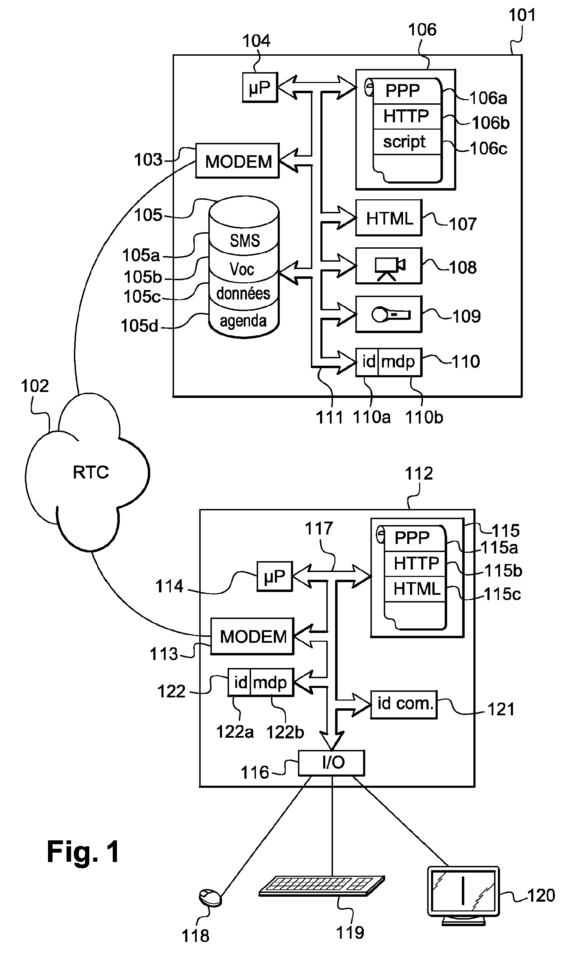

La figure 1 montre un combiné 101 de téléphonie fixe. Le combiné 101 est connecté à un réseau 102 de téléphonie via au moins un modem 103. Le combiné 101 comporte aussi un microprocesseur 104, une mémoire 105 de stockage, une mémoire 106 de programme, une mémoire 107 de description d'interface, une caméra 108, un microphone 109 et une mémoire 110 de stockage d'au moins un identifiant d'utilisateur. Les éléments 103 à 110 du combiné 101 sont interconnectés via un bus 111.

D'une manière générale, et dans ce document, lorsque l'on prête une action à un appareil, cette action est effectuée par un microprocesseur dudit appareil commandé par des codes instructions enregistrés dans une mémoire de programme dudit appareil. Pour un appareil donné on décrit parfois plusieurs mémoires. Il est entendu que ces mémoires peuvent soit correspondre à des composants physiques distincts, soit être différentes zones d'un même composant physique.

La mémoire 106 comporte plusieurs zones chacune correspondant à une fonction de l'appareil. Pour la figure 1 on a représenté que les fonctions intéressant l'invention. La mémoire 106 comporte une zone 106a comportant des codes instructions pour la mise en oeuvre du protocole PPP (Point to Point Protocol, pour protocole point à point). La mémoire 106 comporte une zone 106b comportant des codes instructions pour la mise en oeuvre d'un serveur HTTP. Ces codes instructions permettent au combiné 101 de se comporter comme un serveur HTTP. Le mémoire 106 comporte une zone 106c correspondant à des codes instructions pour l'interprétation de script interagissant avec les composants du combiné 101. Ces composants sont au moins les éléments 105 et 107 à 109. Les codes instructions de la zone 106b étendent les fonctionnalités du serveur correspondant aux codes instructions de la zone 106b en lui permettant d'interagir avec les composants du combiné.

La mémoire 107 comporte une description d'une interface de commande du combiné 101. Cette description est, par exemple, composé de plusieurs fichiers, chacun des ces fichier étant au format HTML (HyperText Markup Language, pour langage de balisage hypertexte) et plus exactement à un format DHTML (Dynamic HyperText Markup Language, pour langage dynamique de balisage hypertexte), l'aspect dynamique étant obtenu par des éléments de script contenu dans les fichiers de description. Ces éléments de script sont interprétés par les codes instructions de la zone 106c, cette interprétation produisant du code HTML Il s'agit là d'un mécanisme classique de mise en oeuvre d'un "serveur Web dynamique". Cette mise en oeuvre est réalisée, dans l'invention, au niveau d'un combiné de téléphonie fixe. Un "serveur web dynamique" est basiquement un serveur doté de capacités d'interprétation des fichiers à servir, cette interprétation conduisant à une modification dynamique des fichiers effectivement servis.

On vient de décrire un combiné apte à se comporter comme un serveur HTTP. Dans la pratique pour la mise en oeuvre de l'invention on peut envisager un combiné se comportant comme un serveur WTP (wireless tranfer protocol, pour protocole de transfert sans fil), FTP (File Transfer protocol, pour protocole de transmission de fichier), ou d'un autre protocole dédié à l'application de l'invention.

De même le contenu de la mémoire 107 pourrait être à un autre format que le HTML, comme par exemple le WML, ou plus généralement un langage basé sur XML.

L'intérêt que présente l'utilisation du protocole HTTP et de HTML est que l'on peut alors utiliser n'importe quel client de navigation Internet pour commander le combiné 101.

La mémoire 105 comporte elle aussi plusieurs zones, chacune correspondant à un type de données enregistrées et enregistrables par le combiné 101. Dans l'exemple choisi pour illustrer l'invention, la mémoire 105 comporte une zone 105a pour l'enregistrement de messages SMS / MMS (Short message System / Multimedia Message System, pour service de message court / service de message multimédia) reçus et/ou à émettre. La mémoire 105 comporte une zone 105b comportant les messages vocaux enregistrés par un répondeur du combiné 101. La mémoire 105 comporte une zone 105c comportant des données diverses enregistrées par l'utilisateur, comme des images, des textes, des sons. La mémoire 105 comporte une zone 105d comportant des données correspondant à un agenda.

La mémoire 110 comporte au moins une paire [identifiant 110a, mot de passe 110b] correspondant à un identifiant et un mot de passe présenté par un utilisateur distant lors d'une tentative de connexion au combiné 101. La mémoire 110 sert de référence lorsqu'un utilisateur distant se connecte. L'identifiant et le mot de passe présenté par l'utilisateur sont comparés au contenu de la mémoire 110.

La figure 1 montre un terminal 112 distant connecté au réseau 102 de téléphonie via au moins un modem 113. Le terminal 112 comporte aussi un microprocesseur 114, une mémoire 115 de programme, des circuits interface 116, une mémoire 121 d'identifiant de combiné, et une mémoire 122 d'identification. Les éléments 113 à 116 et 121 sont interconnectés par un bus 117.

La mémoire 115 comporte une zone 115a comportant des codes instructions pour la mise en oeuvre du protocole PPP. La mémoire 115 comporte une zone 115b comportant des codes instructions pour la mise en oeuvre du protocole HTTP. La mémoire 115 comporte une zone 115c comportant des codes instructions pour la transformation en image de fichier au format HTML. La mémoire 115 comporte des codes instructions complémentaires de ceux présents dans la mémoire 106. Le terminal 112 est apte a être un client du combiné 101 se comportant comme un serveur.

La mémoire 121 comporte un identifiant du combiné 101 sur le réseau 102. Dans la pratique d'un numéro de téléphone comportant 10 chiffres pour la France. Un tel numéro est aussi connu sous le nom de numéro ISDN.

La mémoire 122 comporte au moins une paire [identifiant 122a, mot de passe 122b] correspondant à un identifiant et un mot de passe présenté par un utilisateur distant lors d'une tentative de connexion au combiné 101.

Les circuits 116 permettent de connecter des périphériques d'entrées sorties au terminal 112. De tels périphériques sont, par exemple, une souris 118, un clavier 119 et un écran 120.

Le terminal 112 est, par exemple, un ordinateur de bureau, un ordinateur portable, un assistant personnel ou tout appareil capable d'établir une connexion PPP, de dialoguer avec un serveur de type HTTP et d'interpréter du code de type HTML.

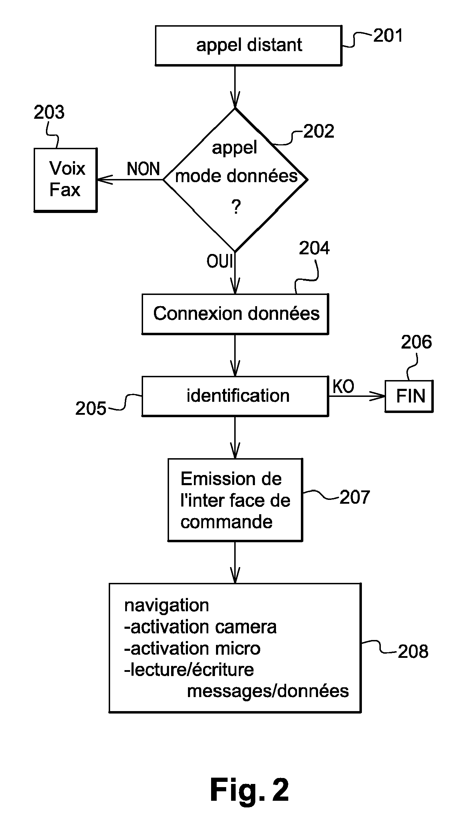

La figure 2 montre une étape dans laquelle le terminal 112 initie un appel vers le combiné 101. Dans cette étape le modem 113 utilise le numéro contenu dans la mémoire 121 pour effectuer un appel téléphonique classique sur le réseau 102. Lorsque le combiné 101 décroche on passe alors à une étape 202 de détermination du mode d'appel.

Dans l'étape 202 le combiné 101 doit se déterminer sur le comportement a adopter par rapport à l'appel entrant reçu suite à l'étape 201. En fait le combiné 101 doit détecter qu'il s'agit d'un appel en vu d'une commande à distance.

Il existe au moins deux possibilités pour réaliser cette détection. Soit le terminal émet, après le décroché du combiné 101, un signal intermittent bien déterminé. Ce signal intermittent est alors reçu et interprété comme étant le signe d'une demande de commande à distance c'est à dire de connexion en mode données. Soit le terminal distant reste silencieux, une durée prédéterminée de silence correspondant à une demande de commande à distance.

Si dans l'étape 202 le combiné détecte une demande de commande à distance alors il passe à une étape 204 d'établissement d'une connexion en mode données, sinon il passe à une étape 203 de traitement de l'appel en mode voix, télécopie ou autre selon ce qui a été détecté à l'étape 202.

Dans l'étape 204 les modems 103 et 113 dialogue pour définir les paramètres de la modulation qui sera utilisée lors du dialogue des combiné 101 et terminal 112 puis on passe à une étape 205 d'identification. La connexion établie est de type point à point. C'est à dire qu'une fois la connexion établie tout ce qui est émis par le terminal 112 est reçu par le combiné 101, et tout ce qui est émis par le combiné 101 est reçu par le terminal 112.

Dans l'étape 205 le terminal 112 met en oeuvre le protocole PPP pour s'identifier sur le combiné 101. Le combiné 101 étant dès lors considéré comme un serveur d'identification, dans un exemple comme un serveur PPP. Dans l'étape 205 le terminal 112 produit un message d'identification comportant l'identifiant 112a et le mot de passe 122b. Le terminal 112 émet alors le message d'identification. Le message d'identification est reçu par le combiné 101. Le combiné 101 compare le contenu du message d'identification au contenu de la mémoire 110 pour déterminer si une paire [identifiant, mot de passe] de la mémoire 110 correspond à la paire [identifiant; mot de passe] du message d'identification.

Cette identification est soit à l'initiative du combiné 101 qui envoie une demande d'identification au terminal 112. Cette demande d'identification est alors retranscrite à l'utilisateur du terminal 112 sous forme d'une invitation lui demandant la saisie d'un identifiant et d'un mot de passe. Si la mémoire 121 a été pré-remplie, l'invitation est détournée par le combiné 112 qui y répond en fonction du contenu de cette mémoire 121.

Cette identification peut aussi être à l'initiative du terminal qui émet spontanément le contenu de la mémoire 121 pour s'identifier.

Si la paire [identifiant, mot de passe] du message d'identification n'est pas dans la mémoire 110 alors on passe à une étape 206 dans laquelle le combiné 101 soit interrompt la connexion immédiatement soit demande à nouveau une paire [identifiant, mot de passe] au terminal 112. Au bout d'un certain nombre de tentatives d'identification infructueuses la connexion entre le combiné et le terminal est de toute façon interrompue.

Si l'identification est positive on passe à l'étape 207 d'émission de l'interface de commande par le combiné. On rappelle que l'interface de commande est définie par un ou plusieurs fichier HTML enregistrés dans la mémoire 107, ces fichiers étant liés entre eux par des liens hypertextes. L'interface de commande est donc un site Internet comportant une ou plusieurs pages. Dans l'étape 207 le combiné 101 émet donc le fichier d'accueil correspondant à la page d'accueil de l'interface de commande. Le fichier d'accueil comporte des liens hypertextes permettant l'accès aux fonctionnalités du combiné 101.

A partir de l'étape 207, le combiné 101 se comporte comme un serveur de données, par exemple un serveur de type HTTP. Le terminal 112 se comporte lui comme un client HTTP HTML. Un tel client est aussi désigné sous le nom de navigateur Internet.

Une fois le fichier d'accueil reçu le terminal 112 le transforme en une image qui est affichée sur l'écran 120. Cette image fait apparaître les liens décrits dans le fichier d'accueil. Ces liens sont sélectionable en utilisant la souris 119. La sélection d'un lien provoque l'émission d'une requête par le terminal 112. En réponse à une telle requête le combiné 101 émet un nouveau fichier qui un fois reçu par le terminal est transformer en une nouvelle image sur l'écran 120. L'utilisateur du terminal 112 navigue ainsi dans l'interface de commande du combiné 101.

Cette navigation correspond à une étape 208 suivant l'étape 207. Si l'utilisateur du terminal 112 sélectionne un lien correspondant à la caméra 108, alors le combiné envoie en réponse des images acquises en temps réel par la caméra 108. Si l'utilisateur du terminal 112 sélectionne un lien correspondant au microphone 109, alors le combiné envoie en réponse des sons acquis en temps réel par le microphone 109.

Si l'utilisateur du terminal 112 sélectionne un lien correspondant à la zone mémoire 105b, alors l'utilisateur peut consulter les messages vocaux enregistrés par la fonction répondeur du combiné 101. La consultation inclut l'effacement d'un ou plusieurs de ces messages.

Si l'utilisateur du terminal 112 sélectionne un lien correspondant à la zone mémoire 105c, alors l'utilisateur peut consulter les données enregistrées dans cette zone de la mémoire du combiné 101. La consultation inclut la mise à jour du contenu de la zone 105c.

Si l'utilisateur du terminal 112 sélectionne un lien correspondant à la zone mémoire 105d, alors l'utilisateur peut consulter les données d'agenda enregistrées dans le combiné 101. La consultation inclut la mise à jour du contenu de la zone 105d, en particulier l'édition de rendez-vous, d'alarmes, de contacts.

Si l'utilisateur du terminal 112 sélectionne un lien correspondant à la zone mémoire 105a, alors l'utilisateur peut consulter les données enregistrées dans cette zone de la mémoire du combiné 101. Cette zone correspond au moins à des messages SMS et/ou MMS reçus par le combiné 101. Ces messages peuvent donc être lus à distance. Il est aussi possible que l'interface de commande à distance comporte une page pour composer un message SMS et/ou MMS. Dans ce cas le message composé sera émis par le terminal 112 vers le combiné 101, le combiné 101 se chargeant ultérieurement d'envoyer ce SMS et/ou MMS à son destinataire.

D'une manière générale une interface de commande à distance permet d'accéder à distance à toutes les fonctionnalités du combiné.

## Revendications

1. Procédé de commande à distance d'un combiné (101) de téléphonie fixe connecté à un réseau (102) de téléphonie via un modem (103), le procédé étant mis en oeuvre par un terminal (112) distant connecté au réseau de téléphonie via au moins un modem (113), le terminal distant appelant le combiné via le réseau de téléphonie, procédé **caractérisé en ce qu'**il comporte au moins les étapes suivantes:
- le terminal distant appelle (201) le combiné,
- le terminal distant s'identifie (202) comme un appelant automatique en mode données,
- le combiné reconnaît (202) le terminal distant comme un appelant automatique en mode données et établie (204) une connexion en mode données,
- le combiné et le terminal entrent (205) dans une procédure d'identification de l'appelant, le combiné agissant en tant que serveur d'identification,
en cas d'identification positive :
- le combiné émet (207) des données correspondant à une interface de commande dudit combiné, ladite interface permettant la commande des fonctionnalités du combiné.

2. Procédé selon la revendication 1, **caractérisé en ce que** les données correspondant à l'interface de commande sont de type HTML, le combiné se comportant comme un serveur HTTP et le terminal comme un client HTTP-HTML.

3. Procédé selon l'une des revendications 1 ou 2, **caractérisé en ce que** le combiné comportant une caméra:
- le terminal émet (208) une requête pour activer ladite caméra,
- le combiné émet en réponse des images acquises par la caméra à intervalles réguliers.

4. Procédé selon l'une des revendications 1 à 3, **caractérisé en ce que** le combiné comportant un microphone:
- le terminal émet (208) une requête pour activer ledit microphone,
- le combiné émet en réponse des sons acquis par le microphone.

5. procédé selon l'une des revendications 1 à 4, **caractérisé en ce que** le combiné comportant au moins une mémoire de stockage,
- le terminal émet (208) une requête pour accéder, en lecture et/ou en écriture, à cette mémoire,
- le combiné émet en réponse le contenu de ladite mémoire, ou met à jour le contenu de ladite mémoire.

6. Procédé selon l'une des revendications 1 à 5, **caractérisé en ce que**:
- l'utilisateur compose (208) un message via le terminal, ledit message composé comportant au moins un identifiant de destinataire et un corps comportant des données de type texte, image et/ou son,
- le terminal émet (208) le message composé vers le combiné,
- le combiné émet (208) le message composé vers le destinataire.
